# FASCICULE DE BREVET EUROPEEN

(11) **EP 1 563 463 B1**
(45) Date de publication et mention de la délivrance du brevet: **25.09.2019**
(21) Numéro de dépôt: 03767939.6
(22) Date de dépôt: 22.10.2003
(51) Int. Cl.: G06T 15/40, G06F 3/033

(54) **PROCÉDÉ ET DISPOSITIF DE CONSTRUCTION ET DE VISUALISATION DE L'IMAGE D'UN MODÈLE INFORMATIQUE**
VERFAHREN UND ANORDNUNG ZUR KONSTRUKTION UND VISUALISIERUNG DES BILDES EINES COMPUTERMODELS
METHOD AND DEVICE FOR CONSTRUCTING AND VIEWING A COMPUTER MODEL IMAGE

(30) Priorité: 22.10.2002 FR 0213118
(43) Date de publication de la demande: 17.08.2005
(73) Titulaire: Dassault Systèmes, 78140 Vélizy-Villacoublay (FR)
(72) Inventeur: PICCUEZZU, Eric, 06100 Nice (FR); DUGALAIS, James, 06600 Antibes (FR)
(74) Mandataire: Decobert, Jean-Pascal
(86) Numéro de dépôt international: PCT/FR2003/050102
(87) Numéro de publication internationale: WO 2004/038576

(56) Documents cités:
- US-A- 5 377 314
- US-A- 5 815 150
- US-A- 5 861 885
- MARSCHALLINGER: "A VOXEL VISUALIZATION AND ANALYSIS SYSTEM BASED ON AUTOCAD" COMPUTERS AND GEOSCIENCES, PERGAMON PRESS, OXFORD, GB, vol. 22, no. 4, mai 1996 (1996-05), pages 379-386, XP002182016 ISSN: 0098-3004
- VIEGA J ET AL: "3D MAGIC LENSES", UIST '96. 9TH ANNUAL SYMPOSIUM ON USER INTERFACE SOFTWARE AND TECHNOLOGY. PROCEEDINGS OF THE ACM SYMPOSIUM ON USER INTERFACE SOFTWARE AND TECHNOLOGY. SEATTLE, WA, NOV. 6 - 8, 1996; [ACM SYMPOSIUM ON USER INTERFACE SOFTWARE AND TECHNOLOGY], NEW YORK,, 6 November 1996 (1996-11-06), pages 51-58, XP000728616, DOI: 10.1145/237091.237098 ISBN: 978-0-89791-798-8
- JAREK ROSSIGNAC ET AL: "Interactive inspection of solids", COMPUTER GRAPHICS, ACM, US, vol. 26, no. 2, 1 July 1992 (1992-07-01), pages 353-360, XP058136159, ISSN: 0097-8930, DOI: 10.1145/142920.134092

## Description

La présente invention concerne un procédé et un dispositif de construction et de visualisation de l'image d'un modèle informatique.

L'invention trouvera son application dans tout domaine lié à la visualisation de modèle en trois dimensions. En particulier, il pourra s'agir d'un mode de visualisation intégrable à toute plate-forme de visualisation liée à un logiciel de conception assistée par ordinateur en trois dimensions (en particulier basé sur les librairies OpenGL®, ou autre) en. permettant d'augmenter la productivité sur des modélisations complexes. Elle pourra également s'appliquer à l'exploration et la découverte de modèles 3D complexes, ainsi que pour des présentations, des vues de détails, en particulier liées à des pages web.

L'invention permet également de réaliser des visualisations de type radiographique de modèles 3D et pourra également s'appliquer à de l'imagerie médicale.

D'une façon générale, le domaine d'application du dispositif et du procédé objets de la présente invention est celui de la visualisation de modèles en trois dimensions.

Dans ce domaine, on distingue les critères d'opacité et de visibilité. L'opacité définit un degré de transparence de l'objet présent sur le modèle, alors que la visibilité est un état booléen (soit visible, soit invisible). Les critères d'opacité et de visibilité sont des attributs complémentaires de l'objet.

Actuellement, de nombreuses solutions de visualisation en trois dimensions tirent partie de la quatrième composante (couramment dénommée Alpha) adjointe au trois canaux classiques de définition de l'image (canaux de couleurs rouge, vert, et bleu). La composante Alpha est supportée par l'ensemble des interfaces de programmation d'applications 3D en temps réel actuellement utilisées, et en particulier exploitées sous la référence OpenGL®.

Selon l'état de la technique, l'attribut d'opacité doit être défini par l'utilisateur. Celui-ci désigne un ou plusieurs objets dans le modèle informatique, et leur affecte une valeur d'opacité. Pour la suite de la description, on utilisera le terme d'opacité tout en considérant que la notion de transparence pourrait ainsi être employée. La visibilité, est elle aussi souvent gérée à l'aide de calques, dans lesquels l'utilisateur navigue pour isoler tel ou tel type d'objet à l'affichage.

Le document "3D Magic Lenses", de John Viega et al., Proceedings of the 9th Annual Symposium on User Interface Software and Technoclogy, page 51-58, novembre 1996, DOI 10.1145/237091.237098, décrit des concepts d'interface "see-through" applicables à des environnements 3D.

Les solutions mises en place aujourd'hui pour l'affectation de la visibilité et de l'opacité présentent de nombreux inconvénients.

En premier lieu, il est très laborieux d'affecter judicieusement des transparences pertinentes à un grand nombre d'objets.

En outre, il n'existe pas d'outil rapide et intuitif permettant de modifier rapidement des attributs de visibilité pour accéder aux pièces internes et cachées au sein du modèle, surtout quand il s'agit de modèles complexes.

Suivant les techniques actuelles, l'opacité et la visibilité ne sont en outre pas dépendantes de la position de l'observateur.

Lorsque de nombreux objets sont transparents, l'interprétation du modèle devient difficile, et il n'est pas possible non plus de limiter ces attributs d'opacité et de visibilité à certaines portions de l'écran.

La présente invention permet de remédier à un ou plusieurs inconvénients des techniques connues jusqu'à présent.

Elle permet en effet de façon rapide et efficace de modifier certains paramètres d'affichage des objets constitutifs du modèle et ce dans une ou plusieurs zones délimitées de l'écran de façon à améliorer la visibilité des objets ou à opérer une présentation particulière aux souhaits de l'utilisateur.

Notamment, il est possible par l'invention de créer une zone d'influence dans l'écran avec un rendu spécifique suivant des attributs définis par l'utilisateur.

La zone ainsi considérée a des dimensions variables pouvant aller d'une portion très réduite de l'écran à l'intégralité de l'écran.

De façon préférée, le rendu spécifique est réalisé en affectant les opacités et la visibilité des objets présents dans la zone considérée suivant une fonction de la distance entre l'objet considéré et la caméra, ou encore le point de vue.

Les attributs d'affichage sont ainsi calculés automatiquement et ne viennent pas se substituer définitivement aux attributs définis par l'utilisateur ce qui permet de conserver l'intégrité du modèle et de ses attributs d'affichage initiaux.

Un autre avantage de l'invention et qu'elle permet de façon préférée de choisir la fonction de la distance entre l'objet et la caméra souhaitée afin de modifier le rendu dans la zone de sélection.

D'autres paramètres peuvent être contrôlés, et ce au moyen d'une interface homme machine.

En jouant sur ces paramètres et sur le type de fonction, l'utilisateur peut à volonté visualiser les objets du modèle à la profondeur souhaitée. On entend ici par profondeur la distance minimale d'un objet à l'écran.

Le contexte du modèle est toujours conservé et le dispositif ici proposé peut se limiter à une ou plusieurs zones avantageusement circulaires de l'écran qui peuvent être déplacées à loisir. Cette zone d'influence peut être fixée pour travailler par la suite avec des outils de conception assistée par ordinateur classiques. Par exemple, les objets complètement transparents ou invisibles dans la zone d'influence ne peuvent pas être sélectionnés.

Le présent dispositif permet également de verrouiller les attributs nouvellement définis afin de les conserver lors de prochaines modifications de la caméra. Le dispositif est aussi avantageusement pourvu d'un mode poursuite, dans lequel la zone d'influence en deux dimensions suit les objets verrouillés lorsque le positionnement de la caméra est modifié.

D'autres buts et avantages apparaîtront au cours de la description qui suit, qui présente un mode préféré de réalisation de l'invention qui n'est cependant pas limitatif.

La présente invention concerne un procédé de construction et de visualisation de l'image d'un modèle informatique, comprenant les étapes consistant à :
- définir et appliquer des attributs d'affichage pour les objets constitutifs du modèle,
- stocker lesdits attributs dans un espace mémoire,
- afficher l'image sur un écran de visualisation formant un plan écran.

On effectue les actions suivantes :
- sélection d'au moins une zone en deux dimensions de l'image, ladite zone étant située dans le plan écran,
- affichage de la partie de l'image située hors de la zone sélectionnée, avec des attributs d'affichage courants,
- détermination de la liste des objets à afficher par sélection des objets du modèle se projetant dans la zone sélectionnée,
- définition d'attributs d'affichage spécifiques pour les objets à afficher dans la zone sélectionnée,
- affichage de la partie de l'image située dans la zone sélectionnée, avec les attributs d'affichage spécifiques. spécifique,
- verrouillage des attributs d'affichage spécifique et suivi, avec la zone sélectionnée, des objets pour lesquels les attributs d'affichage spécifiques on été verrouillés lorsque le positionnement de la caméra est modifié.

De façon avantageuse, ce procédé est tel que :
- On procède à l'affichage de la partie de l'image située hors de la zone sélectionnée par création d'un masque correspondant à ladite zone sélectionnée,
- On définit les attributs d'affichage spécifiques par application d'une fonction de la distance entre l'objet à afficher et le plan écran,
- On supprime de la liste des objets à afficher ceux pour lesquels la valeur de la fonction est inférieure à un seuil prédéfini,
- On stocke les attributs d'affichage spécifiques définis pour maintenir leur application aux objets à afficher même après modification du point de vue de l'image,
- Les attributs d'affichage comprennent une valeur d'opacité,
- Les attributs d'affichage comprennent une valeur booléenne de visibilité,
- On affine la sélection des objets à afficher en supprimant les objets situés à une distance du plan écran inférieure à une valeur prédéterminée,
- On stocke les attributs d'affichage courants avant la définition des attributs d'affichage spécifiques, pour une utilisation ultérieure,
- On lie la zone sélectionnée aux objets à afficher pour qu'ils restent en correspondance quelque soient les changements de position du plan écran.
- On modifie la sélection de la zone de l'image par déplacement de la zone,
- On modifie la sélection de la zone de l'image par modification de dimension de la zone,
- On modifie la sélection de la zone de l'image par changement de position du plan écran,
- On modifie la sélection de la zone de l'image par mouvement du modèle informatique relativement au plan écran.

La présente invention concerne également un dispositif de construction et de visualisation de l'image d'un modèle informatique comportant :
- des moyens de définition et d'application d'attributs d'affichage pour les objets constitutifs du modèle,
- un espace mémoire pour le stockage des données,
- un écran de visualisation et des moyens d'affichage d'image sur ledit écran.

Il comporte en outre un dispositif d'interface homme machine avec des moyens de sélection d'au moins une zone en deux dimensions de l'image, ladite zone étant située dans le plan écran, et des moyens de saisie d'au moins un paramètre de définition d'attributs d'affichage spécifiques pour les objets à afficher dans la zone sélectionnée, en vue de l'affichage de la partie de l'image située hors de la zone sélectionnée, avec des attributs d'affichage courants, et de l'affichage de la partie de l'image située dans la zone sélectionnée, avec les attributs d'affichages spécifiques. Ce dispositif est configuré pour déterminer une liste des objets à afficher par extraction des objets du modèle se projetant dans la zone sélectionnée, et pour verrouiller les attributs d'affichage spécifiques et suivre, avec la zone sélectionnée, les objets pour lesquels les attributs d'affichage spécifiques ont été verrouillés lorsque le positionnement de la caméra est modifié.

Ce dispositif peut se présenter suivant les modes de réalisation préférés introduits ci-après :
- Les moyens de saisie comportent des moyens de sélection d'une fonction de la distance entre l'objet à afficher et le plan écran de l'image à appliquer pour la définition des attributs d'affichage spécifiques,
- Les moyens de saisie comportent des moyens d'entrée d'une valeur de seuil pour supprimer de la liste des objets à afficher ceux pour lesquels la valeur de la fonction est inférieure au dit seuil,
- La zone de sélection est un disque,
- le dispositif d'interface homme machine comporte des moyens de réglage du rayon de la zone de sélection,
- il comporte des moyens pour le traitement local de l'illumination des objets.

Les dessins ci-joints sont donnés à titre d'exemples et ne sont pas limitatifs de l'invention. Ils représentent seulement un mode de réalisation de l'invention et permettront de la comprendre aisément.
La figure 1 illustre la formation d'une zone de sélection avec un rendu d'affichage spécifique relativement au reste de la zone 2D de l'écran.
La figure 2 montre plus précisément un exemple de réalisation de l'interface homme machine du dispositif, et la formation d'une zone de sélection circulaire.
La figure 3 montre une première vue d'un exemple d'application de l'invention pour la visualisation d'une roue de véhicule.
La figure 4 illustre ce modèle de roue, avec la formation d'une zone de sélection et un affichage spécifique du type plan de coupe.
La figure 5 montre une autre possibilité de visualisation sur la base du modèle de la figure 3, avec un rendu de type Pelure d'oignon (Onion skin). Nous qualifions d'onion skin le dispositif permettant d'explorer rapidement un modèle en supprimant à la demande ses objets par couches successives selon leur distance minimale au plan écran (profondeur ou encore « Z »).
La figure 6 illustre une autre possibilité de rendu du dispositif de l'invention appliqué au modèle de la figure 3 avec une fonction Pelure d'oignon.
La figure 8 montre un autre exemple suivant une autre orientation et un autre plan de coupe.

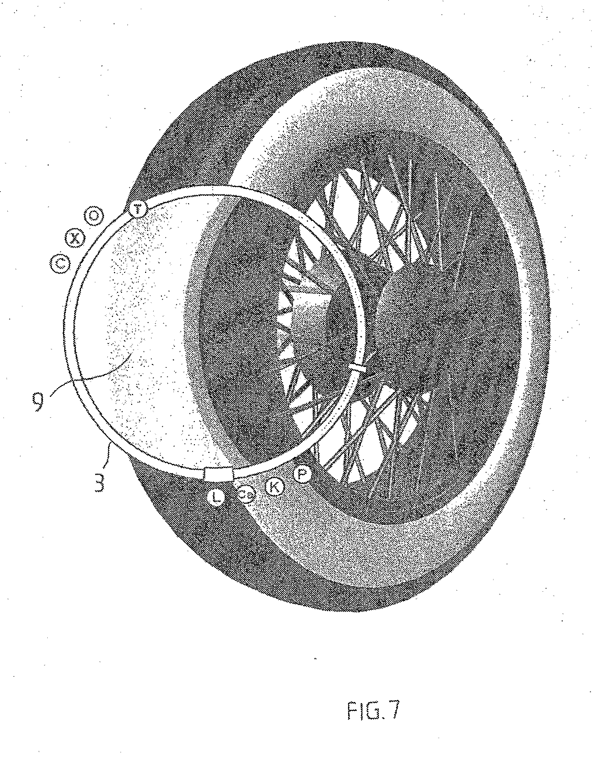

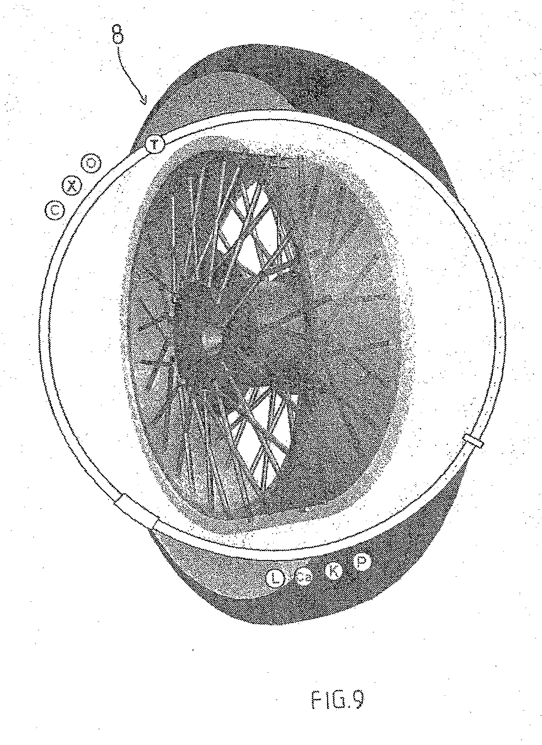

Les figures 7 et 9 sont des exemples de rendu du type radiographie, ou les objets se voient attribuer un attribut d'opacité en fonction de la profondeur, et d'une valeur fixée par l'utilisateur. Pour la suite de la description, on emploie indistinctement les termes de radiographie, rayon X et X RAY pour ce type de rendu visuel assimilable à celui obtenu par des moyens d'imagerie médicale avec des méthodes cependant différentes.

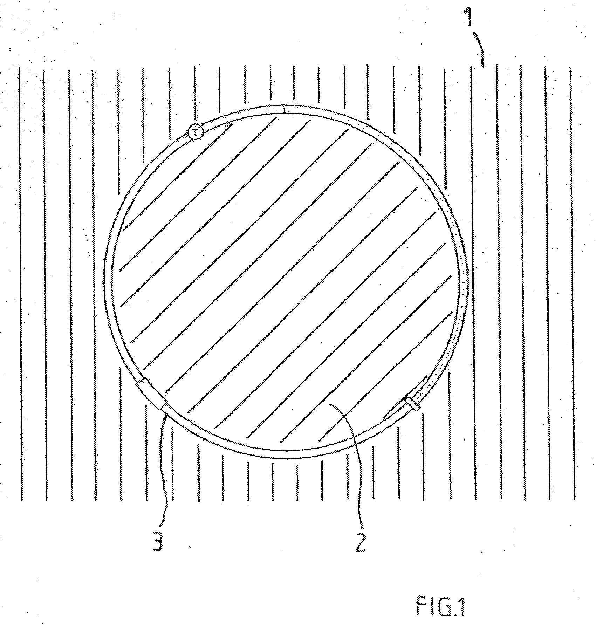

En référence à la figure 1, le dispositif d'interface homme machine 3 permet la sélection d'une zone 2 dans l'aire constituée par l'écran 1. La zone 2 est ici à titre d'exemple en forme de disque et délimitée par une bande de contour 4 circulaire. Bien entendu, cette configuration n'est pas limitative de la présente invention. Par ailleurs, plusieurs zones 2 peuvent être créées sur l'écran 1. En outre, la zone 2 peut occuper tout l'écran. La sélection opérée est alors une sélection totale du contenu du modèle apte à être affiché à l'écran.

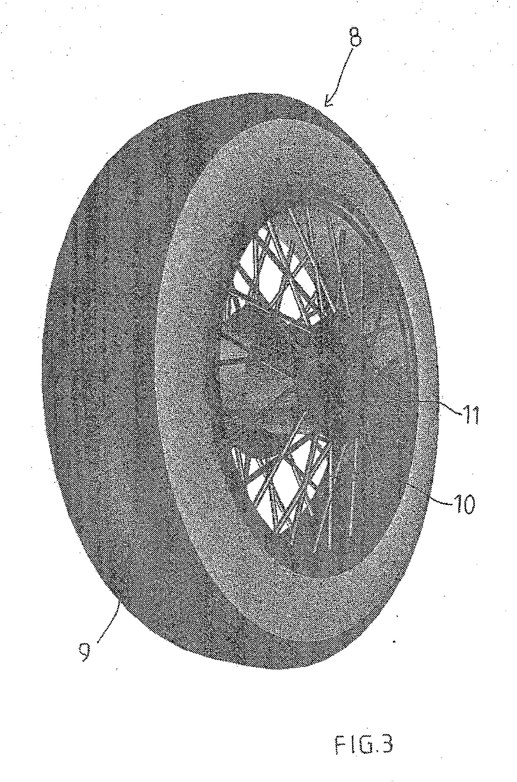

L'écran 1 sert à l'affichage de l'image d'un modèle informatique dont un exemple est donné aux figures 3 à 9 sous la forme d'une roue 8 pour véhicule. Un modèle informatique est constitué d'une pluralité d'objets définis géométriquement par tous moyens de conception assistée par ordinateur courants, et en particulier à l'aide de maillages.

Dans le cas de l'exemple de la roue 8, divers objets sont formés tels qu'un pneumatique 9, des rayons 10, un moyeu 11, et une jante 12.

Pour la description qui suit, mais à titre non limitatif, les attributs d'affichage considérés sont constitués par l'opacité et la paramètre booléen de visibilité de l'objet. On entend par ailleurs par objet à afficher un objet qui se trouve au moins pour partie dans la zone sélectionnée 2. La détermination des objets à afficher peut être opérée par la technique des volumes englobant ou par tout autre technique. Un éventuel tri supplémentaire peut être opéré, par exemple suivant le type d'objet.

Selon l'invention, on commence par sélectionner au moins une zone dans l'image. Pour ce faire, le dispositif d'interface homme machine 3 est utilisé et permet suivant l'exemple des figures la sélection d'une zone 2 au contour circulaire.

La sélection peut en particulier être opérée :
1°- par déplacement ou modification de taille ou de forme de la zone de sélection 12,
2°- Par réalisation d'un mouvement de la scène relativement à l'écran,
3°- Par changement de position du plan écran.

On affiche ensuite la partie de l'image située en dehors de la zone 2 sélectionnée et ce en application des attributs d'affichage courants, c'est à dire prédéfinis dans le contexte initial de définition du modèle. Pour afficher sélectivement cette partie de l'image et non la partie située dans la zone 2 on a recours à un masque dont la définition est stockée dans une mémoire tampon du type « Stencil buffer ».

En ce qui concerne ladite zone 2, on définit des attributs d'affichage spécifiques pour les objets à afficher.

On commence bien entendu par définir la liste des objets concernés par cet affichage spécifique.

On peut ensuite leur affecter une définition des attributs d'affichage, et concernant en particulier l'opacité et la visibilité.

Plus précisément, cette définition des attributs d'affichage spécifiques s'effectue par application d'une fonction *f*, fonction de la distance entre l'objet à afficher et le plan écran. A titre d'exemple, on pourra utiliser une fonction *f* pour un rendu de type pelure d'oignon (Onion skin) dans laquelle seuls les objets dont la profondeur est supérieur à un seuil prédéterminé sont visualisés.

On pourra en outre utiliser une fonction du type rayon X (X Ray), dans laquelle les objets se voient attribuer un attribut d'opacité qui est fonction de leur profondeur et d'une valeur fixée par un curseur 7.

Suivant un autre exemple, la fonction *f* réalise un plan de coupe, qui est parallèle au plan de visualisation, et qui est avancée ou reculée par un réglage de profondeur à l'aide d'un curseur 7.

Une fois que la définition des attributs d'affichage spécifiques est opérée, on affiche la partie de l'image située dans la zone sélectionnée 2 avec ces attributs.

On donne ci-après un exemple plus précis des différentes étapes aptes à être mises en oeuvre par le procédé de l'invention, et ce par l'utilisation de techniques connues faisant intervenir :
- un mémoire tampon de profondeur (Z) couramment dénommée Z buffer. L'utilisation de la technique du Z buffer permet un rendu des faces cachées par l'intermédiaire d'un espace mémoire de type tampon aux dimensions de l'image en deux dimensions. Lors de la projection des polygones de définition du modèle, le pixel n'est remplacé que si le précédent Z (valeur de profondeur) stocké est supérieur au Z courant du pixel testé. Cette procédure de test de profondeur est couramment dénommée depth-test.
- Stencil buffer : il s'agit d'un espace mémoire de type tampon utilisé couramment par des interfaces d'applications de programmation de modélisation en trois dimensions permettant de masquer certaines portions de l'image de façon similaire à l'utilisation d'un pochoir en dessin traditionnel.
- Alpha blending : il s'agit d'une composante d'affichage utilisée en supplément des trois canaux traditionnels de définition de couleurs (rouge, vert, bleu) et qui peut être utilisée pour affecter une valeur d'opacité aux objets.
- Plan écran (également nommé « near clipping plane ») : Le plan écran est le plan « virtuel » sur lequel les objets constituant la scène 3D sont projetés pour créer l'image. Cette projection peut être perspective ou orthographique. L'image se limite à une surface finie de ce plan, le plus souvent rectangulaire. Ce plan est orienté et seuls les objets positionnés tout ou en partie au-delà de ce plan et projetés tout ou en partie dans la surface finie sont visibles. La position de ce plan est liée à la caméra.

Suivant l'exemple d'utilisation de ces paramètres, on pourra utiliser les étapes suivantes pour la réalisation de l'invention :
1. Sauvegarde du contexte initial du modèle :
   - Sauvegarde des états inhérents au Z buffer,
   - Sauvegarde des états inhérents à l'Alpha blending,
   Il s'agit d'étapes de préparation pour la définition de la zone 2 sélectionnée tout en conservant le contexte initial de la modélisation.
2. Préparation de la zone sélectionnée 2 :
   - Activation du Stencil buffer.
   - Initialisation du Stencil buffer avec une valeur de masque nulle,
   - Inactivation du Z buffer,
   - Désactivation de la fonction test de profondeur (depth-test),
   - Désactivation de l'écriture dans le Color-buffer (espace mémoire tampon de définition des couleurs),
   - Dessin de la ou des zones en deux dimensions à sélectionner par action de l'utilisateur sur le dispositif d'interface homme machine 3 et stockage dans le stencil buffer avec une valeur de masque non nulle,
   - Réactivation de l'écriture dans le Color-buffer.
   Dans cette phase, on a préparé la zone sélectionnée 2 ainsi que stencil buffer.
3. Première phase avec les attributs d'affichage courants :
   - Restauration des états courants du Z Buffer,
   - Réalisation de la première passe sur l'écran 1 consistant à dessiner la scène complète en modifiant uniquement les zones de l'écran 1 ou la valeur de masque est nulle (l'intégralité de l'écran sauf la ou les zones sélectionnées 2).
   A l'issue de cette première phase, on obtient l'image du modèle avec les attributs d'affichage du contexte initial, à l'exception de la zone sélectionnée 2.
4. Formation de la zone sélectionnée 2 :
   - Détermination de la liste L des objets à afficher dans la zone sélectionnée 2 par extraction des objets se projetant dans cette zone 2. Tout objet situé en tout ou partie dans la zone 2 est alors retenu. Pour opérer un calcul de projection rapide, on peut utiliser la technique des volumes englobants consistant à encadrer chaque objet dans un parallélogramme rectangle et à utiliser les valeurs de ce parallélogramme pour le calcul de projection,
   - Tri de la liste des objets L obtenus selon leur distance minimale à la caméra, soit :
      o Du plus proche au plus éloigné dans le cas d'un rendu pelure d'oignon,
      o Du plus éloigné au plus proche dans le cas d'un rendu radiographique
   - Sauvegarde des attributs d'affichage (en particulier l'opacité) de la liste L,
   - Modification de l'ensemble des attributs d'affichage (en particulier l'opacité) des objets de la liste L suivant un calcul prédéterminé. Plus précisément, ce calcul fait intervenir une fonction *f* de la distance entre l'objet à afficher et la caméra. Telle que précédemment indiquée, cette fonction peut permettre notamment la réalisation de rendu du type pelure d'oignon, rayon X ou encore plan de coupe.
   - Désactivation du Z buffer en écriture,
   - Désactivation du test de profondeur (depth-test),
   - Activation de l'Alpha blending,
   - Deuxième passe d'affichage. Cette phase consiste à dessiner la portion de l'image contenue dans la zone sélectionnée 2. Pour ce faire, on dessine la liste d'objets ordonnés L (dans l'ordre indiqué précédemment) en modifiant uniquement la zone de l'écran où le masque est défini (c'est-à-dire non nul),
   - Restauration des attributs d'opacité de la liste L.
   Suite à cette étape, on a obtenu le rendu complet de la scène avec, dans la zone 2 sélectionnée, des attributs d'opacité spécifiques correspondants au souhait de l'utilisateur, en particulier par sélection de la fonction *f*.
5. Réinitialisation des paramètres :
   - Désactivation du Stencil buffer,
   - Restauration des états sauvegardés à la sauvegarde du contexte initial (étape 1) inhérents au Z buffer,
   - Restauration des états sauvegardés à la sauvegarde du contexte initial (étape 1) inhérents à l'Alpha blending.

A l'issue de cette étape, on a replacé le système dans un contexte initial. On notera ainsi que la mise en oeuvre de l'invention ne perturbe pas le fonctionnement normal du système de modélisation et d'affichage utilisé.

Suivant une variante, on peut utiliser une fonction *f* telle qu'on supprime de la liste L des objets à afficher ceux pour lesquels la valeur de la fonction *f* est inférieure à une valeur prédéterminée définie par l'utilisateur. En particulier, il peut s'agir d'une valeur minimale de distance à la caméra. Dans ce cas, le tri des objets s'effectue du plus proche au plus éloigné.

En outre, on notera qu'il est possible d'attribuer des illuminations spécifiques ou des rendus particuliers pour la zone 2 sélectionnée. Les attributs d'affichage s'entendent donc aussi de valeurs d'illumination (suivant des paramètres de position et d'intensité des lumières).

Les figures 1 à 9 montrent un exemple de réalisation du dispositif de l'invention appliqué à la visualisation d'un modèle de roue 8.

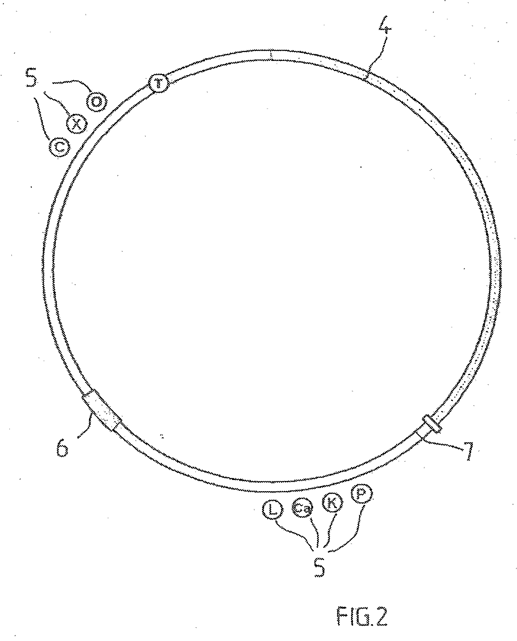

Tel que représenté en figure 2, le dispositif comporte une interface homme machine 3 comprenant une pluralité de boutons 5 permettant diverses commandes et fonctionnalités. Les boutons sont situés sur le pourtour de la bande de contour 4 limitant la zone sélectionnée 2. Il peut s'agit de boutons 5 permettant le choix de la fonction permettant la définition d'attributs d'affichage spécifiques. Ces boutons sont par exemple situés dans la partie supérieure gauche sur la bande de contour 4.

Par ailleurs, d'autres boutons sont également utilisables, tels que ceux illustrés en partie inférieure sur la figure 2. Ces boutons permettent d'autres fonctionnalités telles que la modification locale de l'illumination, la réalisation de capture d'écran, ou encore le verrouillage des paramètres de visualisation.

D'autres fonctionnalités sont également présentes sur le dispositif d'interface homme machine 3 représenté.

Il s'agit d'un bouton ou d'une poignée 6 de changement de rayon permettant de modifier à volonté la taille de la zone sélectionnée 2. La bande de contour 4 peut donc être agrandie ou diminuée à l'aide de la souris par application du pointeur sur cette zone de bouton 6. Tout déplacement du disque entraîne une mise à jour en temps réel de l'affichage. Cette mise à jour est également réalisée lorsque l'utilisateur modifie le positionnement de la vue par modification de la caméra.

Un curseur 7 est en outre présent sur la bande de contour 4. Son déplacement permet de modifier le seuil de profondeur à partir duquel l'affichage de l'objet est opéré. Tout déplacement du seuil à l'aide du curseur 7 entraîne une mise à jour en temps réel de l'affichage. Ce curseur 7 est donc utilisé pour la modification de la valeur du paramètre prédéterminé de seuil de la fonction *f*.

On peut par ailleurs modifier l'emplacement de la zone sélectionnée 2 par application du pointeur de la souris sur la bande de contour 4 et déplacement.

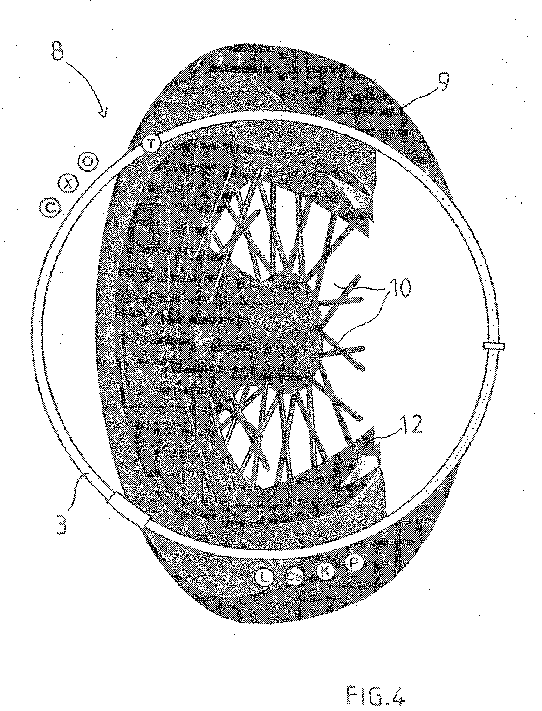

La figure 4 montre un premier exemple d'utilisation du dispositif de l'invention appliqué au modèle de roue 8 tel que représenté en figure 3.

En figure 4, une vue plan de coupe est réalisée avec le positionnement du curseur 7 à un niveau prédéterminé définissant la profondeur du plan de coupe. Les différents objets constitutifs du modèle sont donc ici présentés en coupe.

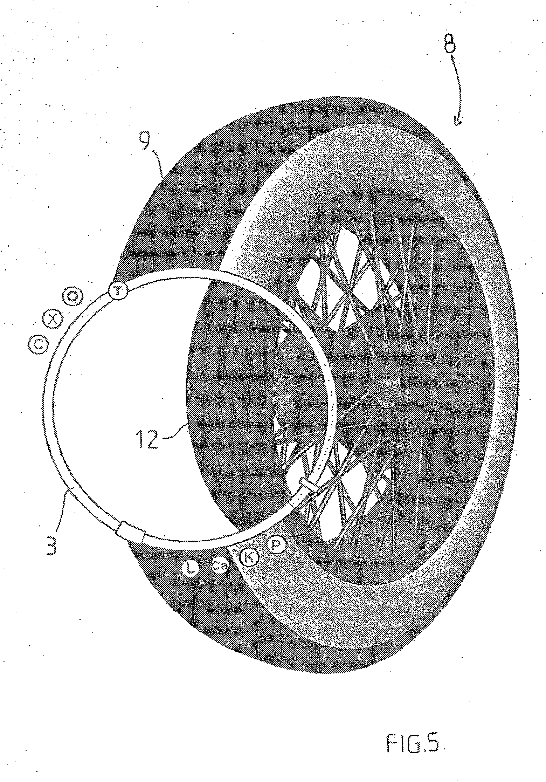

En figure 5, une fonction du type pelure d'oignon à été mise en oeuvre de façon à n'afficher dans la zone sélectionnée 2 que la portion cachée par le pneumatique 9.

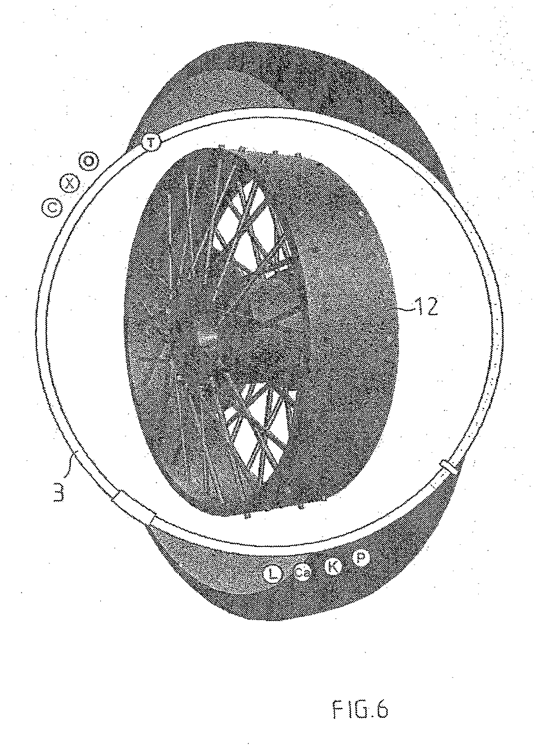

La figure 6 illustre une autre visualisation avec fonction pelure d'oignon dans une zone de sélection 2 agrandie par le biais du bouton 6.

La figure 7 montre un autre exemple de fonction ici constituée par une fonction radiographie, modifiant l'opacité des objets suivant leur profondeur.

Cette fonction permet de visualiser l'intégralité des objets situés dans la zone de sélection et d'appréhender leur positionnement en profondeur.

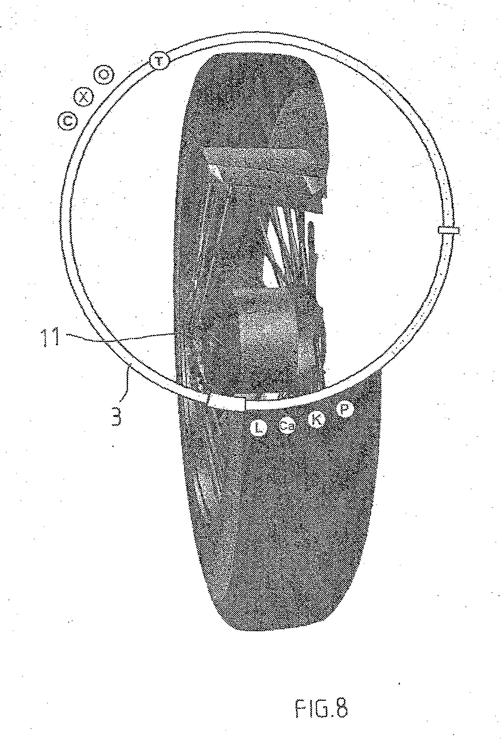

La figure 8 illustre un autre exemple de réalisation de plan de coupe avec une position de curseur 7 modifiée par rapport à la figure 4.

La figure 9 montre enfin une autre possibilité de visualisation avec la fonction radiographie, la roue 8 étant ici présentée de face.

Bien entendu, le dispositif d'interface homme machine pourra intégrer des fonctionnalités courantes, telle qu'une interface WYSIWYG (What You See Is What You Get) consistant à prévisualiser les opérations envisagées lorsque le pointeur s'approche d'un bouton de commande 5. Cela facilite les interactions de l'utilisateur avec le logiciel embarqué.

La fonction envisagée se met en surbrillance.

### REFERENCES

- 1.: écran
- 2.: zone sélectionnée
- 3.: dispositif d'interface homme machine
- 4.: bande de contour
- 5.: bouton
- 6.: bouton de changement de rayon
- 7.: curseur
- 8.: roue
- 9.: pneumatique
- 10.: rayons
- 11.: moyeu
- 12.: jante
- T: Boîte à outil
- O: Fonction pelure d'oignon
- X: Fonction X ray
- C: Fonction plan de coupe
- L: Fonction illumination
- Ca: Caméra
- K: Clé de verrouillage des attributs
- P: Paramètres

## Revendications

1. Procédé de construction et de visualisation de l'image d'un modèle informatique, comprenant les étapes consistant à :
- définir et appliquer des attributs d'affichage pour les objets constitutifs du modèle,
- stocker lesdits attributs dans un espace mémoire,
- afficher l'image sur un écran (1) de visualisation formant un plan écran,
et dans lequel on effectue les actions suivantes :
- sélection d'au moins une zone en deux dimensions de l'image, ladite zone étant située dans le plan écran,
- affichage de la partie de l'image située hors de la zone sélectionnée (2), avec des attributs d'affichage courants,
- détermination de la liste des objets à afficher par sélection des objets du modèle se projetant dans la zone sélectionnée (2),
- définition d'attributs d'affichage spécifiques pour les objets à afficher dans la zone sélectionnée (2),
- affichage de la partie de l'image située dans la zone sélectionnée (2), avec les attributs d'affichage spécifiques,
et **caractérisé en ce que**: on verrouille les attributs d'affichage spécifiques et on suit, avec la zone sélectionnée (2), les objets pour lesquels les attributs d'affichage spécifiques ont été verrouillés lorsque le positionnement de la caméra est modifié.

2. Procédé de construction et de visualisation de l'image d'un modèle informatique selon la revendication 1,
**caractérisé par le fait que**,
on procède à l'affichage de la partie de l'image située hors de la zone sélectionnée (2) par création d'un masque correspondant à ladite zone sélectionnée (2).

3. Procédé de construction et de visualisation de l'image d'un modèle informatique selon l'une quelconque des revendications précédentes, dans lequel on définit les attributs d'affichage spécifiques par application d'une fonction (f) de la distance entre l'objet à afficher et le plan écran.

4. Procédé de construction et de visualisation de l'image d'un modèle informatique selon la revendication précédente, dans lequel on supprime de la liste des objets à afficher ceux pour lesquels la valeur de la fonction (f) est inférieure à un seuil prédéfini.

5. Procédé de construction et de visualisation de l'image d'un modèle informatique selon l'une quelconque des deux revendications précédentes,
**caractérisé par le fait que**,
on stocke les attributs d'affichage spécifiques définis pour maintenir leur application aux objets à afficher même après modification du point de vue de l'image.

6. Procédé de construction et de visualisation de l'image d'un modèle informatique selon l'une quelconque des revendications précédentes,
**caractérisé par le fait que**,
les attributs d'affichage comprennent une valeur d'opacité.

7. Procédé de construction et de visualisation de l'image d'un modèle informatique selon l'une quelconque des revendications précédentes,
**caractérisé par le fait que**,
les attributs d'affichage comprennent une valeur booléenne de visibilité.

8. Procédé de construction et de visualisation de l'image d'un modèle informatique selon l'une quelconque des revendications précédentes,
**caractérisé par le fait que**,
on affine la sélection des objets à afficher en supprimant les objets situés à une distance du plan écran inférieure à une valeur prédéterminée.

9. Procédé de construction et de visualisation de l'image d'un modèle informatique selon l'une quelconque des revendications précédentes,
**caractérisé par le fait que**,
on stocke les attributs d'affichage courants avant la définition des attributs d'affichage spécifiques, pour une utilisation ultérieure.

10. Procédé de construction et de visualisation de l'image d'un modèle informatique selon l'une quelconque des revendications précédentes,
**caractérisé par le fait que**,
on lie la zone sélectionnée (2) aux objets à afficher pour qu'ils restent en correspondance quels que soient les changements de position du point de vue.

11. Procédé de construction et de visualisation de l'image d'un modèle informatique selon l'une quelconque des revendications précédentes,
**caractérisé par le fait que**,
on modifie la sélection de la zone de l'image par déplacement de la zone (2).

12. Procédé de construction et de visualisation de l'image d'un modèle informatique selon l'une quelconque des revendications 1 à 10,
**caractérisé par le fait que**,
on modifie la sélection de la zone de l'image par modification de dimension de la zone (2).

13. Procédé de construction et de visualisation de l'image d'un modèle informatique selon l'une quelconque des revendications 1 à 10,
**caractérisé par le fait que**,
on modifie la sélection de la zone de l'image par changement de position du plan écran.

14. Procédé de construction et de visualisation de l'image d'un modèle informatique selon l'une quelconque des revendications 1 à 10,
**caractérisé par le fait que**,
on modifie la sélection de la zone de l'image par mouvement du modèle informatique relativement au plan écran.

15. Dispositif de construction et de visualisation de l'image d'un modèle informatique comportant :
- des moyens de définition et d'application d'attributs d'affichage pour les objets constitutifs du modèle,
- un espace mémoire pour le stockage des données,
- un écran (1) de visualisation, formant un plan écran, et des moyens d'affichage d'image sur ledit écran (1),
apte à mettre en oeuvre le procédé selon l'une quelconque des revendications précédentes,
étant configuré de sorte que, il comporte en outre un dispositif d'interface homme machine (3) avec des moyens de sélection d'au moins une zone en deux dimensions de l'image, ladite zone étant située dans le plan écran, et des moyens de saisie d'au moins un paramètre de définition d'attributs d'affichage spécifiques pour les objets à afficher dans la zone sélectionnée (2), en vue de l'affichage de la partie de l'image située hors de la zone sélectionnée (2), avec des attributs d'affichage courants, et de l'affichage de la partie de l'image située dans la zone sélectionnée (2), avec les attributs d'affichages spécifiques,
le dispositif étant configuré pour déterminer une liste des objets à afficher par extraction des objets du modèle se projetant dans la zone sélectionnée (2), le dispositif étant **caractérisé par le fait qu'**il est configuré pour verrouiller les attributs d'affichage spécifiques et suivre, avec la zone sélectionnée (2), les objets pour lesquels les attributs d'affichage spécifiques ont été verrouillés lorsque le positionnement de la caméra est modifié.

16. Dispositif selon la revendication précédente, les moyens de saisie comportant des moyens de sélection d'une fonction (*f*) de la distance entre l'objet à afficher et le plan écran de l'image à appliquer pour la définition des attributs d'affichage spécifiques.

17. Dispositif selon la revendication précédente, dans lequel les moyens de saisie comportent des moyens d'entrée d'une valeur de seuil pour supprimer de la liste des objets à afficher ceux pour lesquels la valeur de la fonction (*f*) est inférieure au dit seuil, de sorte à ce que seuls les objets dont la profondeur est supérieure au dit seuil soient visualisés

18. Dispositif selon l'une des revendications 15 à 17,
**caractérisé par le fait que**,
la zone de sélection est un disque.

19. Dispositif selon la revendication précédente,
**caractérisé par le fait que**,
le dispositif d'interface homme machine (3) comporte des moyens de réglage du rayon de la zone de sélection.

20. Dispositif selon l'une quelconque des deux revendications précédentes,
**caractérisé par le fait que**,
la zone de sélection est délimitée par une bande de contour circulaire, et que le dispositif d'interface homme machine (3) comprend une pluralité de boutons disposée sur le pourtour de la bande de contour circulaire.

21. Dispositif selon la revendication précédente et la revendication 17 en combinaison,
**caractérisé par le fait que**,
la pluralité de boutons comprend au moins un curseur configuré pour changer ledit seuil.

22. Dispositif selon l'une quelconque des deux revendications précédentes,
**caractérisé par le fait que**,
la pluralité de boutons comprend au moins un bouton configuré pour changer le rayon du disque.

23. Dispositif selon l'une quelconque des revendications 15 à 22,
**caractérisé par le fait que**,
il comporte des moyens pour le traitement local de l'illumination des objets.

## Patentansprüche

1. Verfahren zur Konstruktion und zur Darstellung des Bildes eines Computermodells, umfassend die Schritte bestehend im:
- Definieren und Anwenden der Anzeigeattribute für die Objekte, aus denen das Modell besteht,
- Speichern der Attribute an einem Speicherort,
- Anzeigen des Bildes auf einem Darstellungsbildschirm (1), der eine Bildschirmebene bildet,
und wobei die folgenden Aktionen vorgenommen werden:
- Auswählen von mindestens einem zweidimensionalen Bereich des Bildes, wobei der Bereich in der Bildschirmebene liegt,
- Anzeigen des Teils des Bildes, der außerhalb des ausgewählten Bereichs (2) liegt, mit aktuellen Anzeigeattributen,
- Bestimmen der Liste der anzuzeigenden Objekte durch Auswählen der Objekte des Modells, die in den ausgewählten Bereich (2) fallen,
- Definieren von spezifischen Anzeigeattributen für die anzuzeigenden Objekte im ausgewählten Bereich (2),
- Anzeigen des Teils des Bildes, der im ausgewählten Bereich (2) liegt, mit den spezifischen Anzeigeattributen,
und **dadurch gekennzeichnet, dass**:
die spezifischen Anzeigeattribute gesperrt werden und mit dem ausgewählten Bereich (2) die Objekte, für die die spezifischen Anzeigeattribute gesperrt wurden, verfolgt werden, wenn die Positionierung der Kamera modifiziert wird.

2. Verfahren zur Konstruktion und zur Darstellung des Bildes eines Computermodells nach Anspruch 1,
**dadurch gekennzeichnet, dass**
die Anzeige des Teils des Bildes, der außerhalb des ausgewählten Bereichs (2) liegt, durch Erzeugen einer Maske erfolgt, die dem ausgewählten Bereich (2) entspricht.

3. Verfahren zur Konstruktion und zur Darstellung des Bildes eines Computermodells nach einem der vorstehenden Ansprüche, wobei die spezifischen Anzeigeattribute durch Anwenden einer Funktion (f) des Abstands zwischen dem anzuzeigenden Objekt und der Bildschirmebene definiert wird.

4. Verfahren zur Konstruktion und zur Darstellung des Bildes eines Computermodells nach dem vorstehenden Anspruch, wobei aus der Liste der anzuzeigenden Objekte diejenigen gelöscht werden, bei denen der Wert der Funktion (f) kleiner ist als eine vordefinierte Schwelle.

5. Verfahren zur Konstruktion und zur Darstellung des Bildes eines Computermodells nach einem der zwei vorstehenden Ansprüche,
**dadurch gekennzeichnet, dass**
die definierten spezifischen Anzeigeattribute gespeichert werden, um ihre Anwendung auf die anzuzeigenden Objekte auch nach Modifikation des Blickwinkels des Bildes beizubehalten.

6. Verfahren zur Konstruktion und zur Darstellung des Bildes eines Computermodells nach einem der vorstehenden Ansprüche,
**dadurch gekennzeichnet, dass**
die Anzeigeattribute einen Opazitätswert umfassen.

7. Verfahren zur Konstruktion und zur Darstellung des Bildes eines Computermodells nach einem der vorstehenden Ansprüche,
**dadurch gekennzeichnet, dass**
die Anzeigeattribute einen booleschen Sichtbarkeitswert umfassen.

8. Verfahren zur Konstruktion und zur Darstellung des Bildes eines Computermodells nach einem der vorstehenden Ansprüche,
**dadurch gekennzeichnet, dass**
die Auswahl der anzuzeigenden Objekte durch Löschen der Objekte verfeinert wird, die in einem Abstand zur Bildschirmebene liegen, der kleiner ist als ein vorbestimmter Wert.

9. Verfahren zur Konstruktion und zur Darstellung des Bildes eines Computermodells nach einem der vorstehenden Ansprüche,
**dadurch gekennzeichnet, dass**
vor dem Definieren der spezifischen Anzeigeattribute die aktuellen Anzeigeattribute für eine spätere Verwendung gespeichert werden.

10. Verfahren zur Konstruktion und zur Darstellung des Bildes eines Computermodells nach einem der vorstehenden Ansprüche,
**dadurch gekennzeichnet, dass**
der ausgewählte Bereich (2) mit den anzuzeigenden Objekten verknüpft wird, sodass sie unabhängig von den Positionsänderungen des Blickwinkels in Entsprechung bleiben.

11. Verfahren zur Konstruktion und zur Darstellung des Bildes eines Computermodells nach einem der vorstehenden Ansprüche,
**dadurch gekennzeichnet, dass**
die Auswahl des Bereichs des Bildes durch Verschieben des Bereichs (2) modifiziert wird.

12. Verfahren zur Konstruktion und zur Darstellung des Bildes eines Computermodells nach einem der Ansprüche 1 bis 10,
**dadurch gekennzeichnet, dass**
die Auswahl des Bereichs des Bildes durch Modifizieren der Dimension des Bereichs (2) modifiziert wird.

13. Verfahren zur Konstruktion und zur Darstellung des Bildes eines Computermodells nach einem der Ansprüche 1 bis 10,
**dadurch gekennzeichnet, dass**
die Auswahl des Bereichs des Bildes durch Verändern der Position der Bildschirmebene modifiziert wird.

14. Verfahren zur Konstruktion und zur Darstellung des Bildes eines Computermodells nach einem der Ansprüche 1 bis 10,
**dadurch gekennzeichnet, dass**
die Auswahl des Bereichs des Bildes durch Bewegen des Computermodells relativ zur Bildschirmebene modifiziert wird.

15. Vorrichtung zur Konstruktion und zur Darstellung des Bildes eines Computermodells, umfassend:
- Mittel zum Definieren und zum Anwenden von Anzeigeattributen für die Objekte, aus denen das Modell besteht,
- einen Speicherort für das Speichern der Daten,
- einen Darstellungsbildschirm (1), der eine Bildschirmebene bildet, und Mittel zur Bildanzeige auf dem Bildschirm (1),
die das Verfahren nach einem der vorstehenden Ansprüche umsetzen kann, wobei sie so konfiguriert ist, dass sie weiter eine Mensch-Maschine-Schnittstellenvorrichtung (3) mit Mitteln zum Auswählen von mindestens einem zweidimensionalen Bereich des Bildes umfasst, wobei der Bereich in der Bildschirmebene liegt, und Mittel zum Eingeben von mindestens einem Parameter zum Definieren von spezifischen Anzeigeattributen für die anzuzeigenden Objekte im ausgewählten Bereich (2) im Hinblick auf die Anzeige des Teils des Bildes, der außerhalb des ausgewählten Bereichs (2) liegt, mit aktuellen Anzeigeattributen, und das Anzeigen des Teils des Bildes, der im ausgewählten Bereich (2) liegt, mit den spezifischen Anzeigeattributen, wobei die Vorrichtung dafür konfiguriert ist, eine Liste der anzuzeigenden Objekte durch Extrahieren der Objekte des Modells, die in den ausgewählten Bereich (2) fallen, zu bestimmen,
wobei die Vorrichtung **dadurch gekennzeichnet ist, dass** sie dafür konfiguriert ist, die spezifischen Anzeigeattribute zu sperren und mit dem ausgewählten Bereich (2) die Objekte, für die die spezifischen Anzeigeattribute gesperrt wurden, zu verfolgen, wenn die Positionierung der Kamera modifiziert wird.

16. Vorrichtung nach dem vorstehenden Anspruch, wobei die Eingabemittel Mittel zum Auswählen einer Funktion (*f*) des Abstands zwischen dem anzuzeigenden Objekt und der Bildschirmebene des Bildes umfassen, die für die Definition der spezifischen Anzeigeattribute angewendet werden soll.

17. Vorrichtung nach dem vorstehenden Anspruch, wobei die Eingabemittel Mittel zum Erfassen eines Schwellenwerts umfassen, um diejenigen aus der Liste der anzuzeigenden Objekte zu löschen, bei denen der Wert der Funktion (*f*) kleiner ist als die Schwelle, sodass nur die Objekte dargestellt werden, deren Tiefe größer als die Schwelle ist

18. Vorrichtung nach einem der Ansprüche 15 bis 17,
**dadurch gekennzeichnet, dass**
der Auswahlbereich eine Scheibe ist.

19. Vorrichtung nach dem vorstehenden Anspruch,
**dadurch gekennzeichnet, dass**
die Mensch-Maschine-Schnittstellenvorrichtung (3) Mittel zum Einstellen des Radius des Auswahlbereichs umfasst.

20. Vorrichtung nach einem der zwei vorstehenden Ansprüche,
**dadurch gekennzeichnet, dass**
der Auswahlbereich von einem runden Konturband begrenzt wird, und dass die Mensch-Maschine-Schnittstellenvorrichtung (3) eine Vielzahl von Schaltflächen umfasst, die am Umfang des runden Konturbands angeordnet sind.

21. Vorrichtung nach dem vorstehenden Anspruch und Anspruch 17 in Kombination,
**dadurch gekennzeichnet, dass**
die Vielzahl von Schaltflächen mindestens einen Cursor umfasst, der dafür konfiguriert ist, die Schwelle zu ändern.

22. Vorrichtung nach einem der zwei vorstehenden Ansprüche,
**dadurch gekennzeichnet, dass**
die Vielzahl von Schaltflächen mindestens eine Schaltfläche umfasst, die dafür konfiguriert ist, den Radius der Scheibe zu ändern.

23. Vorrichtung nach einem der Ansprüche 15 bis 22,
**dadurch gekennzeichnet, dass**
sie Mittel für das lokale Verarbeiten der Beleuchtung der Objekte umfasst.

## Claims

1. Method for constructing and viewing the image of a computerised model, comprising steps consisting of:
- defining and applying display attributes for objects constituting the model,
- storing said attributes in a memory space,
- displaying the image on a viewing screen (1) forming a screen plane,
and wherein the following actions are carried out:
- selecting at least one two-dimensional zone of the image, said zone being located in the screen plane,
- displaying the portion of the image located outside of the selected zone (2), with current display attributes,
- determining the list of objects to be displayed by selecting objects of the model being projected in the selected zone (2),
- defining specific display attributes for objects to be displayed in the selected zone (2),
- displaying the portion of image located in the selected zone (2), with the specific display attributes,
and **characterised in that**:
the specific display attributes are locked and it is followed, with the selected zone (2), the objects for which the specific display attributes have been locked when the positioning of the camera is modified.

2. Method for constructing and viewing the image of a computerised model according to claim 1, **characterised by** the fact that, the displaying of the portion of the image located outside of the selected zone (2) is proceeded with, by creating a mask corresponding to said selected zone (2).

3. Method for constructing and viewing the image of a computerised model according to any one of the preceding claims, wherein the specific display attributes are defined by applying a function (f) of the distance between the object to be displayed and the screen plane.

4. Method for constructing and viewing the image of a computerised model according to the preceding claim, wherein the objects to be displayed of the list of objects to be displayed for which the value of the function (f) is less than a predefined threshold are removed from the said list of objects to be displayed.

5. Method for constructing and viewing the image of a computerised model according to any one of the two preceding claims, **characterised by** the fact that, the specific display attributes defined to maintain the application thereof to the objects to be displayed, even after modification of the viewpoint of the image, are stored.

6. Method for constructing and viewing the image of a computerised model according to any one of the preceding claims, **characterised by** the fact that, the display attributes comprise a opacity value.

7. Method for constructing and viewing the image of a computerised model according to any one of the preceding claims, **characterised by** the fact that, the display attributes comprise a Boolean visibility value.

8. Method for constructing and viewing the image of a computerised model according to any one of the preceding claims, **characterised by** the fact that, selecting the objects to be displayed is refined by removing the objects located at a distance from the screen plane, less than a predetermined value.

9. Method for constructing and viewing the image of a computerised model according to any one of the preceding claims, **characterised by** the fact that, the current display attributes are stored before defining the specific display attributes, for a subsequent use.

10. Method for constructing and viewing the image of a computerised model according to any one of the preceding claims, **characterised by** the fact that, the selected zone (2) is linked to the objects to be displayed such that they remain in correspondence, whatever the changes in position of the viewpoint.

11. Method for constructing and viewing the image of a computerised model according to any one of the preceding claims, **characterised by** the fact that, selecting the zone of the image is modified by moving the zone (2).

12. Method for constructing and viewing the image of a computerised model according to any one of claims 1 to 10, **characterised by** the fact that, selecting the zone of the image is modified by modifying the dimension of the zone (2).

13. Method for constructing and viewing the image of a computerised model according to any one of claims 1 to 10, **characterised by** the fact that, selecting the zone of the image is modified by changing position of the screen plane.

14. Method for constructing and viewing the image of a computerised model according to any one of claims 1 to 10, **characterised by** the fact that, selecting the zone of the image is modified by moving the computerised model relative to the screen plane.

15. Device for constructing and viewing the image of a computerised model comprising:
- means for defining and applying display attributes for objects constituting the model,
- a memory space for storing data,
- a viewing screen (1), forming a screen plane, and means for displaying the image on said screen (1),
capable of implementing the method according to any one of the preceding claims, being configured such that, it further comprises a man-machine interface device (3) with means for selecting at least one two-dimensional zone of the image, said zone being located in the screen plane, and means for inputting at least one parameter for defining specific display attributes for objects to be displayed in the selected zone (2), in view of displaying the portion of the image located outside of the selected zone (2), with current display attributes, and the displaying of the portion of the image located in the selected zone (2), with the specific display attributes, the device being configured to determine a list of objects to be displayed by extracting objects from the model being projected in the selected zone (2), the device being **characterised by** the fact that, it is configured to lock the specific display attributes and to follow, with the selected zone (2), the objects for which the specific display attributes have been locked when the positioning of the camera is modified.

16. Device according to the preceding claim, the input means comprising means for selecting a function (f) of the distance between the object to be displayed and the screen plane of the image to be applied to define specific display attributes.

17. Device according to the preceding claims, wherein the input means comprise means for inputting a threshold value to remove from the list of objects to be displayed, those for which the value of the function (f) is less than said threshold, such that only the objects of which the depth is greater than said threshold are viewed.

18. Device according to one of claims 15 to 17, **characterised by** the fact that, the selection zone is a disc.

19. Device according to the preceding claim, **characterised by** the fact, that, the man-machine interface device (3) comprises means for adjusting the radius of the selection zone.

20. Device according to any one of the two preceding claims, **characterised by** the fact that, the selection zone is delimited by a circular contour strip, and that the man-machine interface device (3) comprises a plurality of buttons arranged over the perimeter of the circular contour strip.

21. Device according to the preceding claim and claim 17 in combination, **characterised by** the fact that, the plurality of buttons comprises at least one cursor configured to change said threshold.

22. Device according to any one of the two preceding claims, **characterised by** the fact that, the plurality of buttons comprises at least one button configured to change the radius of the disc.

23. Device according to any one of claims 15 to 22, **characterised by** the fact that, it comprises means for the local processing of the illumination of the objects.
